# EUROPÄISCHE PATENTSCHRIFT

(11) **EP 1 820 994 B1**
(45) Veröffentlichungstag und Bekanntmachung des Hinweises auf die Patenterteilung: **17.09.2008**
(21) Anmeldenummer: 07001232.3
(22) Anmeldetag: 20.01.2007
(51) Int. Cl.: F16F 1/38

(54) **Gelenklager, insbesondere für ein Fahrwerk eines Nutzfahrzeugs**
Rocker bearing, in particular for a chassis of a commercial vehicle
Pendule, en particulier pour le train d'atterrissage d'un véhicule utilitaire

(30) Priorität: 16.02.2006 DE 102006007160
(43) Veröffentlichungstag der Anmeldung: 22.08.2007
(73) Patentinhaber: Jörn GmbH, 71336 Waiblingen (DE)
(72) Erfinder: Zawadzki, Bernd, 71409 Schwaikheim (DE); Lippke, Oliver, 71686 Remseck (DE)
(74) Vertreter: Liebl, Thomas

(56) Entgegenhaltungen:
- EP-A- 1 103 739
- EP-A1- 0 905 405
- EP-A2- 0 819 556
- EP-A2- 1 132 642
- WO-A-03/076218
- DE-C1- 4 012 599
- DE-C1- 4 322 304
- DE-U1- 20 206 648

## Beschreibung

Die Erfindung betrifft ein Gelenklager, insbesondere für ein Fahrwerk eines Nutzfahrzeugs, nach dem Oberbegriff des Anspruchs 1.

Ein gattungsgemäßes, bekanntes Gelenklager (EP 0 493 731 B1) besteht aus einer Gelenkbuchse als Elastomermetallteil mit einem inneren Metallteil als erstem Lagerteil, auf dem eine umfangsseitige Elastomerschicht festhaftend angebracht ist und aus einem Aufnahmeauge als zweitem Lagerteil, in das die Gelenkbuchse mit radialer Vorspannung in der Elastomerschicht eingepresst ist.

Dokument EP 0819556 A2 zeigt einen Gelenklager gemäß dem Oberbegriff des Anspruchs 1.

Konkret ist hier das innere Metallteil ein stabiles Metallrohr, welches zu beiden Seiten der Elastomerschicht mit Überständen aus dieser vorsteht. Auf der Elastomerschicht ist ein Außenblech aufvulkanisiert mit einem axialen Längsschlitz, welcher sich auch durch die Elastomerschicht erstreckt und der beim Einpressen in das Aufnahmeauge und einer Durchmesserverringerung geschlossen wird. Auf die beidseitigen Überstände des inneren Metallteils sind Stützringe aufgesteckt, die im eingepressten Zustand der Gelenkbuchse an den jeweils zugeordneten Stirnseiten der Elastomerschicht anliegen und die axial fixiert sind, so dass der Gummikörper durch die Stützringe relativ zum inneren Metallteil in Axialrichtung abgestützt ist. Dadurch wird ein elastisches Gelenklager geschaffen, das in axialer Richtung durch die Elastomerschichtabstützung an den Stützringen relativ hart und in den anderen Richtungen demgegenüber relativ weich ist.

Ein weiter bekanntes, gattungsgemäßes Gelenklager (DE 41 27 092 C1) weist eine Elastomerschicht auf, die in ihrer axialen Längsmitte durch eine umlaufende Ausnehmung in zwei seitliche Gelenkbuchsenbereiche geteilt ist, wobei in deren Gummischichten jeweils ein umlaufendes Außenblech anvulkanisiert und ein umlaufendes Zwischenblech einvulkanisiert sind. Zwischen den Gelenkbuchsenbereichen greift ein am inneren Metallteil radial abstehender umlaufender Anschlagbund ein, welcher sich nach einem vorgegebenen, relativ kleinen Federweg sowohl radial zum Aufnahmeauge hin als auch axial an den Gelenkbuchsenbereichen als Anschlag bei entsprechender Lagerauslenkung abstützt. Für eine geeignete Montage beim Einpressen der Gelenkbuchse in das Aufnahmeauge wird diese hier zusammen mit einem die Gelenkbuchse umfassenden Montagerohr eingepresst. Das Montagerohr wird zudem mit stirnseitigen Überständen für eine axiale Lagefixierung zum Aufnahmeauge hin umgebördelt. Hier liegt ein Gelenklager vor, das durch den radialen Anschlag nach einer geringen radialen Einfederung eine stark ansteigende, radiale Federkennung aufweist. In Axialrichtung ist dagegen dieses Gelenklager weicher und weist zudem eine geringe Verdrehsteifigkeit auf.

Aufgabe der Erfindung ist es, ein Gelenklager für elastische, hohe axiale Abstützkräfte mit auch relativ hohen radialen Abstützkräften bei geringer Verdrehsteifigkeit zu schaffen, das einfach und kostengünstig herstellbar sowie mit geringem Aufwand montierbar ist.

Diese Aufgabe wird mit den Merkmalen des Anspruchs 1 gelöst.

Gemäß Anspruch 1 ist die Elastomerschicht aus dem Umfangsbereich, zumindest in Teilbereichen der beiden gegenüberliegenden Stirnseitenbereiche des inneren Metallteils unter Ausbildung von Elastomer-Axialstützelementen nach radial innen weitergeführt. Zwischen dem Aufnahmeauge und der Elastomerschicht ist zudem ein Außenrohrteil eingesetzt, das zu beiden Stirnseiten wenigstens eine radial nach innen gerichtete Abstützwange aufweist, welche von axial außen ein zugeordnetes Elastomer-Axialstützelement in einer Anlageverbindung übergreift.

Dadurch wird bei einer axialen Lagerauslenkung zwischen dem inneren Metallteil und dem Aufnahmeauge die Axialkraft im wesentlichen durch die Elastomer-Abstützelemente und die Abstützwangen abgestützt. Ein axialer Federweg wird bei entsprechender Auslegung mit hoher axialer Federkonstante in den Elastomer-Axialstützelementen molekular aufgenommen. Diese axiale Abstützung ist weitgehend entkoppelt von der radialen Abstützung und der Verdrehsteifigkeit, welche im wesentlichen durch die relativen Elastomerschichtdicken zwischen den Elastomer-Axialstützelementen und der umfangsseitigen Elastomerschicht gegebenenfalls mit darin aufgenommenen Zwischenblechen bestimmt ist. Damit weist das erfindungsgemäße Gelenklager große Freiräume für Anpassungen und Dimensionierungen an unterschiedliche Einsatzfälle auf, wo es auf angepasste unterschiedliche Federkennlinien in den einzelnen Raumrichtungen ankommt. Zudem ist das Lager einfach aufgebaut, kostengünstig herstellbar und mit geringem Aufwand montierbar.

Das Gelenklager kann beispielsweise bei einer Auslegung gemäß Anspruch 11 mit einer relativ dicken umfangsseitigen Elastomerschicht und dagegen axial relativ dünneren Elastomer-Axialabstützelementen ein Gelenklager für eine Vorderachse einer Einzelradaufhängung eines Nutzfahrzeugs geschaffen werden, das geeignet ist, in Fahrzeuglängsrichtung hohe Kräfte mit einer hohen axialen Federkonstante für eine stramme Achsführung aufzunehmen, wobei die radiale Federkonstante, insbesondere bei Verwendung von Zwischenblechen, ebenfalls hoch ist um den Sturz des Rades über die Betriebsdauer möglichst klein zu halten. Trotz dieser straffen Anbindung liegt eine hier gewünschte geringe Verdrehfederkonstante vor, so dass das Eigenfederverhalten der Achse reduziert ist.

Nach Anspruch 2 können mehrere Elastomer-Axialabstützelemente und zugeordnete Abstützwangen über den Umfang verteilt an beiden Stirnseiten angeordnet sein. Bevorzugt werden in einer symmetrischen Anordnung nach Anspruch 3 die Gelenkbuchse, das innere Metallteil und das Aufnahmeauge zylindrisch ausgeführt, wobei die Axialstützelemente zu beiden Stirnseiten des inneren Metallteils umlaufende, angehaftete Elastomerstützringe sowie entsprechend die Abstützwangen am Außenrohrteil Abstützwangenringe sind. Damit werden bei vereinfachter Herstellung für eine Vielzahl von Einsatzfällen symmetrische Federeigenschaften erhalten.

Um, das Außenrohrteil mit den nach radial innen gerichteten Abstützwangen vor dem Einpressvorgang auf die Gelenkbuchse aufsteckbar zu machen, wird mit Anspruch 4 vorgeschlagen, das Außenrohrteil aus wenigstens zwei in Längsrichtung geteilten Außenrohrschalenteilen herzustellen, welche nach dem Einpressvorgang ringförmig geschlossen sind. Alternativ dazu kann in einer Weiterbildung das Außenrohrteil nach Anspruch 5 aus zwei Außenrohrschalenteilen bestehen, die durch einen Längsspalt einerseits getrennt sind und gegenüberliegend an einer materialeinheitlichen, durch eine Materialverdünnung gebildeten Scharnierachse aufklappbar verbunden sind. Es ist auch möglich, das Außenrohrteil in Querrichtung zu teilen und die dann vorliegenden Außenrohrschalenteile axial auf die Gelenkbuchse aufzustecken. Diese Lösung ist jedoch für den Einpressvorgang ins Aufnahmeauge, ebenso wie für die betriebsmäßige Axialabstützung weniger geeignet.

Zur Vermeidung von Kraftspitzen im Elastomermaterial im Bereich des Übergangs von der Innenseite des Außenrohrteils zu den Abstützwangen wird mit Anspruch 6 vorgeschlagen, diesen Übergang durch eine Bogenform abzurunden. Dadurch wird die Elastomermaterialbelastung vergleichmäßigt und die Lagerlebensdauer erhöht.

Das Außenrohrteil mit seinen Abstützwangen ist dazu bestimmt, hohe Radialkräfte abzustützen und muss daher stabil ausgeführt sein. Nach Anspruch 7 ist es daher zweckmäßig, das Außenrohrteil, insbesondere auch mit Innenrundungen als Drehteil herzustellen. Grundsätzlich sind auch andere Herstellverfahren denkbar. Beispielsweise könnten an einen Rohrabschnitt beidseitig Ringscheiben als Abstützwangenringe angefügt werden.

Je nach Einsatzfall kann es zweckmäßig sein, dass gemäß Anspruch 8 die Elastomer-Axialstützelemente nach dem Einpressen ins Aufnahmeauge bereits unter axialer Vorspannung zwischen den Abstützwangen und den Stirnseiten des inneren Metallteils eingespannt sind. Dadurch kann die axiale Steifigkeit insgesamt bei Bedarf weiter erhöht werden und bei einer axialen Lagerauslenkung kann ein Abheben der Abstützwangen von den Elastomer-Axialstützelementen verhindert werden.

In einer besonders bevorzugten Ausführungsform nach Anspruch 9 hat das innere Metallteil jeweils stirnseitig eine radial äußere Ausnehmung zur Aufnahme der Elastomer-Axialstützelemente, insbesondere eine stufenförmige Ringausnehmung zur Aufnahme eines vorgespannten Elastomer-Abstützrings. Dadurch wird beispielsweise der Elastomer-Abstützring von dem zugeordneten Abstützwangenring so übergriffen, dass er gegen mechanische Einflüsse geschützt in der stufenförmigen Ringausnehmung aufgenommen ist.

Nach Anspruch 10 soll auf der Elastomerschicht ein radial äußeres umlaufendes Außenblech angehaftet, vorzugsweise anvulkanisiert sein. Zudem kann die Elastomerschicht durch einvulkanisierte Zwischenbleche in mehrere übereinanderliegende Elastomerschichtbereiche aufgeteilt sein. Dadurch wird über die angehafteten und eingebetteten Bleche die axiale Elastomerverdrängung reduziert und vergleichmäßigt, sowie die radiale Tragfähigkeit erhöht. Die Au-ßenbleche und Zwischenbleche sollen dabei nicht bis in den Bereich der seitlichen Elastomer-Abstützelemente ragen, um dort die Elastomerbewegung nicht durch die Bleche zu stören.

Nach Anspruch 11 ergeben sich große Dimensionierungs- und Anpassungsfreiräume durch unterschiedliche Dickendimensionierungen, gegebenenfalls in Verbindung mit der Anordnung und Anzahl von Blechen in der Elastomerschicht.

In einer bevorzugten Ausführungsform nach Anspruch 12 weisen im nicht vorgespannten Herstellzustand die Elastomerschicht und gegebenenfalls das Außenblech sowie das wenigstens eine Zwischenblech einen Längsschlitz auf, der sich vorzugsweise V-förmig mit seiner Schlitztiefe bis zum inneren Metallteil erstreckt. Im fertig montierten Zustand ist die Gelenkbuchse mit dem Au-ßenrohrteil mit gegenüber dem Aufnahmeauge im unbelasteten Zustand grö-ßeren Durchmesser axial unter Aufbringung einer radialen Vorspannung und Durchmesserverkleinerung in das Aufnahmeauge bei geschlossenem Längsschlitz eingepresst. Die radiale Vorspannung in der Gelenkbuchse fixiert einerseits diese im Außenrohrteil durch das die radiale Vorspannung auch gegenüber dem Aufnahmeauge wirkt und dadurch andererseits auch das Außenrohrteil axial und verdrehsicher im Aufnahmeauge fixiert.

Für eine Axialabstützung und Axialsicherung der Gelenkbuchse und des Au-ßenrohrteils im Aufnahmeauge, gegebenenfalls zusätzlich zur Fixierung durch die radiale Vorspannung, wird mit Anspruch 13 vorgeschlagen, das Außenrohrteil im Herstellzustand axial länger als das Aufnahmeauge auszubilden. Zu beiden Seiten des Außenrohrteils ist eine jeweils stirnseitig im äußeren radialen Bereich umlaufende oder segmentweise Nut eingebracht, so dass sich dort ein radial äußerer Steg ergibt, der nach dem Einpressen der Gelenkbuchse mit dem Aufnahmerohrteil nach radial außen zur Abstützung an der zugeordneten Aufnahmeaugenstirnseite umgebördelt wird.

Als Elastomermaterial wird nach Anspruch 14 vorzugsweise ein vulkanisierbares Gummimaterial verwendet.

Das Gelenklager kann grundsätzlich mit an sich bekannten Anschlusstechniken ausgerüstet sein. Insbesondere können nach Anspruch 15 am inneren Metallteil einseitig oder beidseitig Anschlusszapfen oder Anschlusspratzen angebracht sein. Ebenso kann das innere Metallteil als Innenrohrteil mit einer zentralen Bohrung zur Aufnahme einer Anschlussverschraubung ausgebildet sein.

Anhand einer Zeichnung wird die Erfindung näher erläutert.

Es zeigen:
- Fig. 1: einen Längsschnitt durch ein montiertes Gelenklager,
- Fig. 2: einen Querschnitt durch eine Gelenkbuchse im Herstellzustand als Bestandteil des Gelenklagers nach Fig. 1, und
- Fig. 3: einen Querschnitt durch ein Außenrohrteil als Bestandteil des Gelenklagers nach Fig. 1.

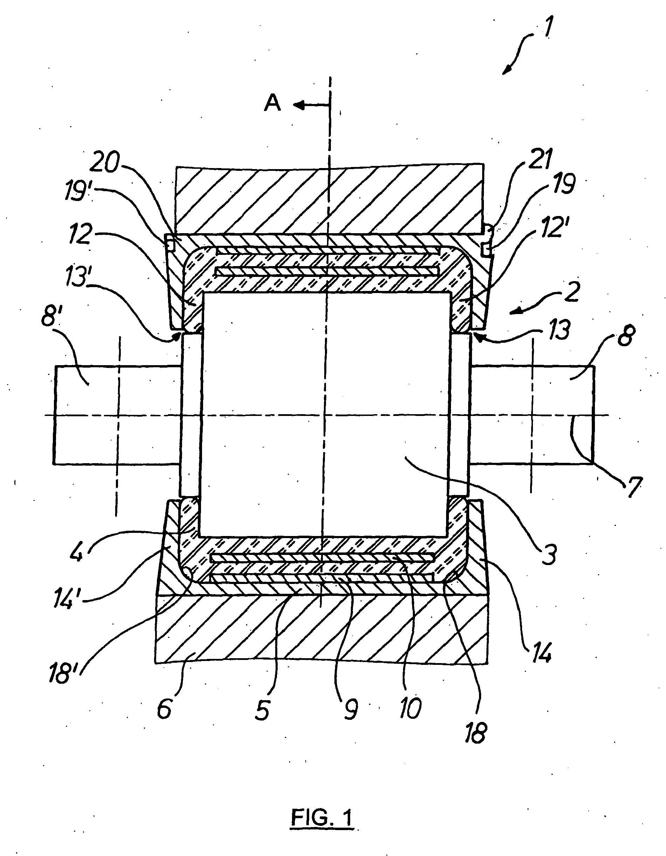

In Fig. 1 ist ein Längsschnitt durch ein zylindrisches Gelenklager 1 im fertig montierten Zustand dargestellt mit einer Gelenkbuchse 2, die aus einem inneren Metallteil 3 einer umfangsseitig darauf angebrachten Elastomerschicht 4 einem Außenrohrteil 5 und einem Aufnahmeauge 6 besteht.

Das innere Metallteil 3 weist als erstes Lagerteil beidseitig in Richtung der Lagerachse 7 Anschlusspratzen 8, 8' auf, mit denen durch Verschraubungen eine erste Verbindung, beispielsweise zu einem Fahrzeugaufbauteil oder einem Achslagerbock hergestellt werden kann. Das Aufnahmeauge 6 kann beispielsweise das Längsende eines Achslenkers sein.

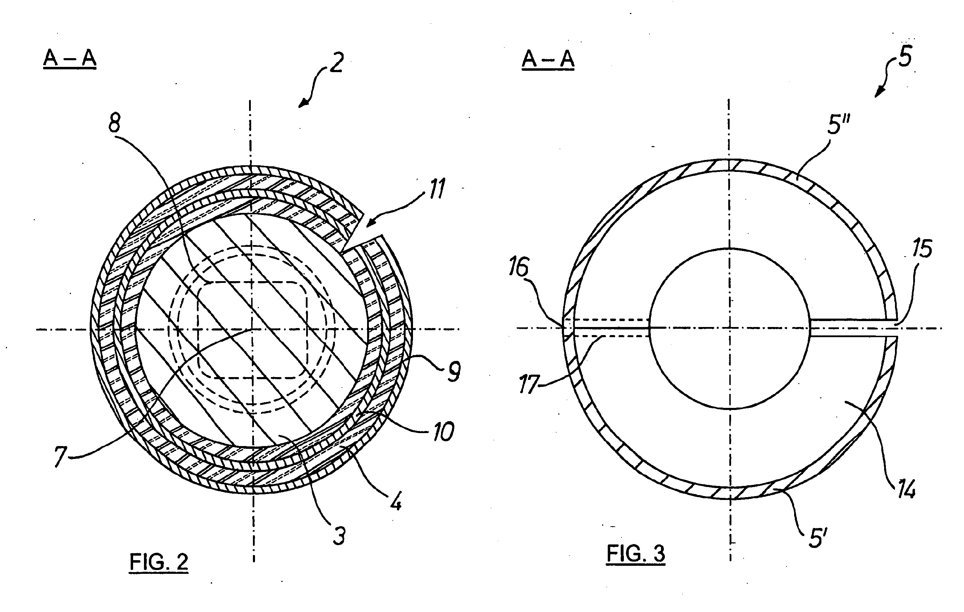

Die einzelnen Bauteile des Gelenklagers 1 werden weiter in Verbindung mit den Fig. 2 und 3 erläutert:

Aus dem Querschnitt der Gelenkbuchse 2 in Fig. 2 ist der zylindrische Aufbau zu ersehen, mit dem zylindrischen inneren Metallteil 3 der darauf aufvulkanisierten Elastomerschicht 4, auf der ein Außenblech 9 als gerolltes Rohrteil anvulkanisiert ist. In der Elastomerschicht 4 ist zudem ein Zwischenblech 10, ebenfalls als gerolltes Rohr, einvulkanisiert. Bei dem in Fig. 2 dargestellten, noch nicht ins Aufnahmeauge 6 eingepressten Herstellzustand weist die Elastomerschicht 4, das Außenblech 9 und das Zwischenblech 10 einen Längsschlitz 11 auf, der sich V-förmig mit seiner Schlitztiefe bis zum inneren Metallteil 3 erstreckt.

Aus dem Längsschnitt von Fig. 1 ist zu ersehen, dass die umlaufende Elastomerschicht 4 weiter zu den Stirnseitenbereichen des inneren Metallteils unter Ausbildung von Elastomer-Axialstützelementen nach radial innen geführt ist, wobei in der dargestellten Ausführungsform zu beiden Stirnseiten umlaufende, angehaftete Elastomer-Abstützringe 12, 12' gebildet sind. Dort ist am inneren Metallteil eine radial äußere stufenförmige Ringausnehmung 13, 13' vorgesehen, in der (im dargestellten vorgespannten Zustand) jeweils der zugeordnete Elastomer-Abstützring 12, 12' einliegt.

Weiter ist aus Fig. 1 ersichtlich, dass das Außenblech 9 und das Zwischenblech 10 mit ihrer axialen Länge nicht bis in den Bereich der Elastomer-Abstützringe 12, 12' reichen.

Das Außenrohrteil 5 weist zu beiden Stirnseiten radial nach innen gerichtete Abstützwangen in der Art umlaufender Abstützwangenringe 14, 14' auf. Das Außenrohrteil 5 besteht aus zwei Außenrohrschalenteilen 5', 5" (siehe Fig. 3), die durch einen Längsspalt 15 getrennt und gegenüberliegend an einer, gegebenenfalls durch eine Materialverdünnung, gebildeten Scharnierachse 16 aufklappbar verbunden sind. Alternativ können zwei insgesamt voneinander getrennte Außenrohrschalenteile 5', 5" vorgesehen sein, wie dies mit den strichlierten Linien 17 angedeutet ist. Wie aus Fig. 1 zu ersehen, ist der Übergang an der Innenseite des Außenrohrteils 5 zum jeweiligen Abstützwangenring 12, 12' mit einer Bogenform 18, 18' abgerundet.

Zur Montage des Gelenklagers 1 wird das Außenrohrteil 5 mit seinen beiden Außenrohrschalenteilen 5', 5" (Fig. 3) auf die Gelenkbuchse 2 (Fig. 2) aufgesetzt, wobei der Außendurchmesser dieser Einheit aus Gelenkbuchse 2 und Außenrohrteil 5 größer als der Innendurchmesser des Aufnahmeauges 6 ist. Das Außenrohrteil 5 mit der Gelenkbuchse 2 wird dann unter Durchmesserverkleinerung und Aufbringung einer radialen Vorspannung in das Aufnahmeauge 6 axial eingepresst, wobei sich die Längsschlitze 11 und 15 schließen. Weiter werden dadurch auch die Elastomer-Abstützringe 12, 12' unter Aufbringung insbesondere auch einer axialen Vorspannung zwischen die Abstützwangenringe 14, 14' und die zugeordneten Stirnringseiten des inneren Metallteils 3 eingepresst. Durch die dadurch erzeugte radiale Vorspannung werden die Gelenkbuchse 2 und das Außenrohrteil 5 ortsfest im Aufnahmeauge 6 fixiert.

Zusätzlich kann noch eine Axialabstützung und Axialabsicherung realisiert werden, wie dies im oberen Teil der Fig. 1 gezeigt ist: Hier ist das axiale Außenrohrteil 5 axial länger als das Aufnahmeauge 6 ausgebildet und steht beidseitig am Aufnahmeauge 6 über. In diesem jeweiligen Überstand ist stirnseitig im äußeren radialen Bereich eine umlaufende Nut 19, 19' angebracht, wodurch radial außen ein umlaufender Steg 20 gebildet ist, der unmittelbar nach dem Einpressvorgang noch axial absteht (im linken oberen Bereich von Fig. 1 dargestellt). Dieser Steg 20 wird anschließend für eine axiale Abstützung zu einem an der Stirnseite des Aufnahmeauges 6 anliegenden Bördelrand 21 als Axialabstützung umgebördelt (im oberen rechten Teil von Fig. 1 dargestellt).

## Patentansprüche

1. Gelenklager, insbesondere für ein Fahrwerk eines Nutzfahrzeugs,
mit einer Gelenkbuchse (2) als Elastomermetallteil bestehend aus einem inneren Metallteil (3) als ersten Lagerteil, auf dem eine umfangsseitige Elastomerschicht (4) festhaftend angebracht ist und mit einem Aufnahmeauge (6) als zweitem Lagerteil, in das die Gelenkbuchse (2) mit radialer Vorspannung in der Elastomerschicht (4) eingepresst ist,
wobei die Elastomerschicht (4) aus dem Umfangsbereich zumindest in Teilbereichen der beiden gegenüberliegenden Stirnseitenbereiche des inneren Metallteils (3) unter Ausbildung von Elastomer-Axialstützelementen (12, 12') nach radial innen weitergeführt ist,
**dadurch gekennzeichnet,**
**dass** zwischen dem Aufnahmeauge (6) und der Elastomerschicht (4) ein Außenrohrteil (5) eingesetzt ist, das zu beiden Stirnseiten wenigstens eine radial nach innen gerichtete Abstützwange (14, 14') aufweist, welche von axial außen ein zugeordnetes Elastomer-Axialstützelement (12, 12') in einer Anlageverbindung übergreift.

2. Gelenklager nach Anspruch 1, **dadurch gekennzeichnet, dass** mehrere Elastomer-Axialabstützelemente und zugeordnete Abstützwangen über den Umfang verteilt angeordnet sind.

3. Gelenklager nach Anspruch 1, **dadurch gekennzeichnet, dass** die Gelenkbuchse (2), das innere Metallteil (3) und das Aufnahmeauge (6) zylindrisch ausgeführt sind und die Elastomer-Axialstützelemente zu beiden Stirnseiten des inneren Metallteils (3) umlaufende, angehaftete Elastomer-Abstützringe (12, 12'), sowie entsprechend die Abstützwangen am Außenrohrteil (5) Abstützwangenringe (14, 14') sind.

4. Gelenklager nach einem der Ansprüche 1 bis 3, **dadurch gekennzeichnet, dass** das Außenrohrteil (5) aus wenigstens zwei in Längsrichtung oder Querrichtung geteilten Außenrohrschalenteilen (5', 5") besteht.

5. Gelenklager nach Anspruch 4, **dadurch gekennzeichnet, dass** das Außenrohrteil (5) aus zwei Außenrohrschalenteilen (5', 5") besteht, die durch einen Längsspalt (15) getrennt und gegenüberliegend an einer materialeinheitlichen, gegebenenfalls durch eine Materialverdünnung gebildeten Scharnierachse (16) aufklappbar verbunden sind.

6. Gelenklager nach einem der Ansprüche 1 bis 5, **dadurch gekennzeichnet, dass** an der Innenseite des Außenrohrteils (5) jeweils der Übergang zur Abstützwange, insbesondere zum Abstützwangenring(14, 14') durch eine Bogenform (18, 18') abgerundet ist.

7. Gelenklager nach einem der Ansprüche 1 bis 6, **dadurch gekennzeichnet, dass** das Außenrohrteil (5) als Drehteil gefertigt ist.

8. Gelenklager nach einem der Ansprüche 1 bis 7, **dadurch gekennzeichnet, dass** die Elstomer-Axialstützelemente (12, 12') unter axialer Vorspannung zwischen den Abstützwangen (14, 14') und den zugeordneten Stirnseiten des inneren Metallteils (3) nach dem Einpressen ins Aufnahmeauge (6) eingespannt sind.

9. Gelenklager nach einem der Ansprüche 1 bis 8, **dadurch gekennzeichnet, dass** das innere Metallteil (3) jeweils stirnseitig eine Ausnehmung zur Aufnahme der Elastomer-Axialstützelemente, insbesondere jeweils eine stufenförmige Ringausnehmung (13, 13') zur Aufnahme eines angehafteten, vorgespannten Elastomer-Abstützrings (14, 14') aufweist.

10. Gelenklager nach einem der Ansprüche 1 bis 9, **dadurch gekennzeichnet, dass** auf der Elastomerschicht (4) ein radial äußeres, umlaufendes Außenblech (9) angehaftet, vorzugsweise anvulkanisiert ist und/oder in der Elastomerschicht (4) wenigstens ein umlaufendes Zwischenblech (10) eingebettet, vorzugsweise einvulkanisiert ist, und sich das Außenblech (9) und Zwischenblech (10) mit ihrer axialen Länge nur im Bereich zwischen den Elastomer-Axialstützelementen (14, 14') erstrecken.

11. Gelenklager nach einem der Ansprüche 1 bis 10, **dadurch gekennzeichnet, dass** im fertig montierten und vorgespannten Zustand die umfangsseitige Dicke der Elastomerschicht (4) auf dem inneren Metallteil (3) relativ dick im Vergleich zur axialen Dicke der Elastomer-Axialstützelemente (12, 12') ist.

12. Gelenklager nach einem der Ansprüche 1 bis 11, **dadurch gekennzeichnet, dass** im nicht vorgespannten Herstellzustand der Gelenkbuchse (2) die Elastomerschicht (4) und gegebenenfalls das Außenblech (9) und das wenigstens eine Zwischenblech (10) einen zugeordneten Längsschlitz (11) aufweisen, der sich vorzugsweise V-förmig mit seiner Schlitztiefe bis zum inneren Metallteil (3) erstreckt, wobei im fertig montierten Zustand die Gelenkbuchse (2) mit dem Außenrohrteil (5) mit gegenüber dem Aufnahmeauge (6) im unbelasteten Zustand größeren Durchmesser axial unter Aufbringung einer radialen Vorspannung in das Aufnahmeauge (6) bei geschlossenem Längsschlitz (11) eingepresst ist.

13. Gelenklager nach einem der Ansprüche 1 bis 12, **dadurch gekennzeichnet, dass** das Außenrohrteil (5) im Herstellzustand axial länger als das Aufnahmeauge (6) ist mit einer jeweils stirnseitigen, im äußeren radialen Bereich umlaufenden oder segmentweisen Nut (19, 19'), so dass sich dort ein radial äußerer Steg (20) ergibt, der nach dem Einpressen der Gelenkbuchse (2) zusammen mit dem Außenrohrteil (5) in das Aufnahmeauge (6) nach radial außen zum Aufnahmeauge (6) hin als Axialabstützung und Axialsicherung zu einem Bördelrand (21) umgebördelt ist.

14. Gelenklager nach einem der Ansprüche 1 bis 13, **dadurch gekennzeichnet, dass** das Elastomermaterial ein vulkanisierbares Gummimaterial ist.

15. Gelenklager nach einem der Ansprüche 1 bis 14, **dadurch gekennzeichnet, dass** am inneren Metallteil (3) einseitig oder beidseitig Anschlusszapfen oder Anschlusspratzen (8, 8') angebracht sind oder das innere Metallteil (3) ein Innenrohrteil mit einer Bohrung zur Aufnahme einer Anschlussverschraubung ist.

## Claims

1. Pivot bearing, in particular for a chassis of a commercial vehicle, having a pivot bush (2) as an elastomer/metal part comprising an inner metal part (3) as a first bearing part, on which a circumferential-side elastomer layer (4) is attached in a firmly adhering manner, and having a receiving eye (6) as a second bearing part, into which the pivot bush (2) is pressed with radial prestress in the elastomer layer (4), the elastomer layer (4) being guided further radially to the inside from the circumferential region at least in part regions of the two end-side regions, which lie opposite one another, of the inner metal part (3) with the formation of elastomer axial supporting elements (12, 12'), **characterized in that** an outer pipe part (5) is inserted between the receiving eye (6) and the elastomer layer (4), which outer pipe part (5) has, on both end sides, at least one radially inwardly directed supporting cheek (14, 14') which engages over an associated elastomer axial supporting element (12, 12') from the axial outside in an abutting connection.

2. Pivot bearing according to Claim 1, **characterized in that** a plurality of elastomer axial supporting elements and associated supporting cheeks are arranged in a manner which is distributed over the circumference.

3. Pivot bearing according to Claim 1, **characterized in that** the pivot bush (2), the inner metal part (3) and the receiving eye (6) are of cylindrical configuration and the elastomer axial supporting elements are adhering elastomer supporting rings (12, 12') which are circumferential on both end sides of the inner metal part (3), and supporting-cheek rings (14, 14') in accordance with the supporting cheeks on the outer pipe part (5).

4. Pivot bearing according to one of Claims 1 to 3, **characterized in that** the outer pipe part (5) comprises at least two outer-pipe shell parts (5', 5") which are divided in the longitudinal direction or transverse direction.

5. Pivot bearing according to Claim 4, **characterized in that** the outer pipe part (5) comprises two outer-pipe shell parts (5', 5'') which are divided by a longitudinal gap (15) and are connected on the opposite side such that they can be folded open at a single-material hinge axis (16) which is optionally formed by a thinned material portion.

6. Pivot bearing according to one of Claims 1 to 5, **characterized in that**, on the inner side of the outer pipe part (5), in each case the transition to the supporting cheek, in particular to the supporting-cheek ring (14, 14'), is rounded off by an arcuate shape (18, 18').

7. Pivot bearing according to one of Claims 1 to 6, **characterized in that** the outer pipe part (5) is manufactured as a turned part.

8. Pivot bearing according to one of Claims 1 to 7, **characterized in that** the elastomer axial supporting elements (12, 12') are clamped under axial prestress between the supporting cheeks (14, 14') and the associated end sides of the inner metal part (3) after being pressed into the receiving eye (6).

9. Pivot bearing according to one of Claims 1 to 8, **characterized in that** the inner metal part (3) has, in each case on the end side, a recess for receiving the elastomer axial supporting elements, in particular in each case a stepped annular recess (13, 13') for receiving an adhering, prestressed elastomer supporting ring (14, 14').

10. Pivot bearing according to one of Claims 1 to 9, **characterized in that** a radially outer, circumferential outer plate (9) is adhesively bonded to, preferably vulcanized onto, the elastomer layer (4), and/or at least one circumferential intermediate plate (10) is embedded, preferably vulcanized, into the elastomer layer (4), and the outer plate (9) and the intermediate plate (10) extend with their axial length only in the region between the elastomer axial supporting elements (14, 14').

11. Pivot bearing according to one of Claims 1 to 10, **characterized in that,** in the finally assembled and prestressed state, the circumferential-side thickness of the elastomer layer (4) on the inner metal part (3) is relatively thick in comparison with the axial thickness of the elastomer axial supporting elements (12, 12').

12. Pivot bearing according to one of Claims 1 to 11, **characterized in that,** in the non-prestressed manufactured state of the pivot bush (2), the elastomer layer (4) and optionally the outer plate (9) and the at least one intermediate plate (10) have an associated longitudinal slot (11) which extends preferably in a V-shaped manner with its slot depth as far as the inner metal part (3), the pivot bush (2) with the outer pipe part (5) being pressed into the receiving eye (6) in the finally mounted state when the longitudinal slot (11) is closed, axially under application of a radial prestress, with a greater diameter than the receiving eye (6) in the unloaded state.

13. Pivot bearing according to one of Claims 1 to 12, **characterized in that**, in the manufactured state, the outer pipe part (5) is longer axially than the receiving eye (6) with a respectively end-side groove (19, 19') which is circumferential in the outer radial region or is segmented, so that a radially outer web (20) results there which, after the pivot bush (2) has been pressed into the receiving eye (6) together with the outer pipe part (5), is flanged over radially to the outside towards the receiving eye (6) as an axial support and axial securing means to form a flanged edge (21).

14. Pivot bearing according to one of Claims 1 to 13, **characterized in that** the elastomer material is a rubber material which can be vulcanized.

15. Pivot bearing according to one of Claims 1 to 14, **characterized in that** connecting journals or connecting claws (8, 8') are attached to the inner metal part (3) on one side or on both sides, or the inner metal part (3) is an inner pipe part having a hole for receiving a joining screw connection.

## Revendications

1. Palier à rotule, en particulier pour un châssis d'un véhicule utilitaire, avec un coussinet oscillant (2) en tant que pièce métallique élastomère se composant d'une pièce métallique intérieure (3) comme première partie de palier à rotule, sur laquelle est fixée une couche d'élastomère (4) périphérique et avec un oeil de positionnement (6) comme deuxième partie de palier à rotule dans laquelle le coussinet oscillant (2) est enfoncé avec une tension initiale radiale dans la couche d'élastomère (4).
sachant que la couche d'élastomère (4) est guidée radialement vers l'intérieur depuis la zone périphérique au moins dans des zones partielles des deux zones frontales avant opposées l'une à l'autre de la partie métallique intérieure (3) par la configuration d'éléments d'appui axial en élastomère (12, 12'), **caractérisé en ce que,** entre l'oeil de positionnement (6) et la couche d'élastomère (4) est insérée une partie de tube externe (5), qui comporte sur les deux faces avant au moins une joue d'appui dirigée radialement vers l'intérieur (14, 14') qui chevauche axialement depuis l'extérieur un élément d'appui axial en élastomère ajouté (12, 12') dans une connexion d'installation.

2. Palier à rotule selon la revendication 1, **caractérisé en ce que** plusieurs éléments d'appui axial en élastomère et joues d'appui ajoutées sont répartis sur le pourtour.

3. Palier à rotule selon la revendication 1, **caractérisé en ce que** le coussinet oscillant (2), la partie métallique intérieure (3) et l'oeil de positionnement (6) sont réalisés de manière cylindrique, et **en ce que** les éléments d'appui axial en élastomère sur les deux faces avant (12, 12') de la partie métallique intérieure (3) sont des bagues d'appui élastomère (12, 12') tournantes collées de la même façon que les joues d'appui sur la partie de tube externe (5) sont des bagues de joues d'appui (14, 14').

4. Palier à rotule selon l'une quelconque des revendications 1 à 3, **caractérisé en ce que** la partie de tube externe (5) se compose d'au moins deux parties en coque du tube externe (5, 5') divisées dans le sens longitudinal ou dans le sens transversal.

5. Palier à rotule selon la revendication 4, **caractérisé en ce que** la partie de tube externe (5) se compose de deux parties en coque du tube externe (5', 5"), qui sont séparées par une fente longitudinale (15) et sont reliées de manière opposée et repliable sur un axe de charnière (16) fait d'un matériau homogène, le cas échéant formé par une réduction de matériau.

6. Palier à rotule selon l'une quelconque des revendications 1 à 5, **caractérisé en ce que** sur le côté intérieur de la partie du tube externe (5) la transition vers la joue d'appui, en particulier vers la bague de joue d'appui (14, 14') est chaque fois arrondie par une forme de cintre (18, 18').

7. Palier à rotule selon l'une quelconque des revendications 1 à 6, **caractérisé en ce que** la partie de tube externe (5) est fabriqué en tant que partie pivotante.

8. Palier à rotule selon l'une quelconque des revendications 1 à 7, **caractérisé en ce que** les éléments d'appui axial élastomère (12, 12') sont serrés entre les joue d'appui (14, 14') et les faces avant ajoutées de la pièce métallique intérieure (3) après l'enfoncement dans l'oeil de positionnement (6).

9. Palier à rotule selon l'une quelconque des revendications 1 à 8, **caractérisé en ce que** la partie métallique intérieure (3) comporte respectivement côté avant un creux pour le logement des éléments d'appui axial en élastomère, en particulier respectivement un creux annulaire à gradins (13, 13') pour le logement d'une bague d'appui en élastomère collée précontrainte (14, 14').

10. Palier à rotule selon l'une quelconque des revendications 1 à 9, **caractérisé en ce que** sur la couche d'élastomère (4) une tôle extérieure (9) tournant radialement (9) est collée, de préférence grillée et/ou **en ce que** dans la couche d'élastomère (4) au moins une tôle intermédiaire tournante (10) est insérée, de préférence vulcanisée, et que la tôle extérieure (9) et la tôle intermédiaire (10) ne s'étendent sur leur longueur axiale que dans la zone entre les éléments d'appui axial en élastomère (14, 14').

11. Palier à rotule selon l'une quelconque des revendications 1 à 10, **caractérisé en ce que**, à l'état monté fini et précontraint, l'épaisseur périphérique de la couche d'élastomère (4) sur la partie métallique intérieure (3) est relativement épaisse par rapport à l'épaisseur axiale des éléments d'appui axial en élastomère (12, 12').

12. Palier à rotule selon l'une quelconque des revendications là 11, **caractérisé en ce que**, à l'état de fabrication non précontraint du coussinet oscillant (2), la couche d'élastomère (4) et le cas échéant la tôle extérieure (9) et la au moins une tôle intermédiaire (10) présentent une fente longitudinale ajoutée (11) s'étendant de préférence en forme de V, avec une profondeur de fente atteignant la pièce métallique intérieure (3), sachant qu'à l'état monté fini, le coussinet oscillant (2) avec la partie de tube externe (5) dont le diamètre est plus grand par rapport à l'oeil de positionnement (6) à l'état non chargé, est enfoncé axialement par l'application d'une tension radiale dans l'oeil de positionnement (6) avec une fente longitudinale fermée (11).

13. Pendule selon l'une quelconque des revendications 1 à 12, **caractérisé en ce que** la partie du tube externe (5) à l'état de fabrication est axialement plus long que l'oeil de positionnement (6) avec une rainure respectivement à l'avant, périphérique ou par segment, dans la zone extérieure radiale (19, 19') de sorte qu'une traverse extérieure (20) sort de là radialement, traverse qui, après l'enfoncement de la douille d'articulation (2) est rabattue radialement vers l'extérieur en même temps que la partie de tube externe (5) dans l'oeil de positionnement (6) jusqu'à l'oeil de positionnement (6) en tant que support axial et fixation axiale à une bordure rabattue (21).

14. Palier à rotule selon l'une quelconque des revendications 1 à 13, **caractérisé en ce que** le matériau élastomère est un caoutchouc vulcanisé.

15. Palier à rotule selon l'une quelconque des revendications 1 à 14, **caractérisé en ce que** sur la partie métallique intérieure (3) des pivots de raccordement ou des griffes de raccordement (8, 8') sont installés d'un côté ou des deux côtés ou la partie métallique intérieure (3) est une partie de tube interne avec un alésage pour le logement d'un raccordement par vis.
